# EUROPÄISCHE PATENTANMELDUNG

(11) **EP 0 723 799 A1**
(43) Veröffentlichungstag der Anmeldung: **31.07.1996**
(21) Anmeldenummer: 95101191.5
(22) Anmeldetag: 28.01.1995
(51) Int. Cl.: B01D 39/20, B01D 46/12, B01D 29/11

(54) **Poröser Keramikfilter**

(71) Anmelder: Koppe, Franz, D-92676 Eschenbach Oberpfalz (DE)
(72) Erfinder: Koppe, Franz, D-92676 Eschenbach Oberpfalz (DE)

(57) **Zusammenfassung**

Poröser Keramikfilter, erhältlich durch ein Verfahren, bei dem keramische Partikel durch Zugabe eines organischen Bindemittels in die Gestalt einer formbaren Masse überführt werden und bei dem die Masse anschließend zu dem Filterkörper geformt und durch eine thermische Nachbehandlung und Versinterung der Partikel bleibend fixiert wird, wobei die Masse zunächst in die Gestalt von ebenen Platten (2,3) und ersten und/oder zweiten Distanzelementen (4) überführt wird und wobei die Platten (2,3) und Distanzelemente (4) unter Freilassung zumindest eines mit zumindest einer Abflußöffnung verbindbaren Hohlraumes (1) unter Druck zusammengefügt und gemeinsam zu einer homogenen Einheit versintert werden.

## Beschreibung

Die Erfindung betrifft einen porösen Keramikfilter, erhältlich durch ein Verfahren, bei dem keramische Partikel durch Zugabe eines organischen Bindemittels in die Gestalt einer formbaren Masse überführt wird und bei dem die Masse anschließend zu dem Filterkörper geformt und durch eine thermische Nachbehandlung und Versinterung der Partikel bleibend fixiert wird.

Ein solcher Keramikfilter ist bekannt. Er gelangt primär in den Bereichen der Mikro- und Ultrafiltration zur Anwendung und zeichnet sich durch eine besonders gute chemische und thermische Stabilität aus. Anwendungen in organischen Lösungsmitteln und in heißen, agressiven Prozessmedien der chemischen Industrie sind dadurch möglich sowie in der Lebensmittelindustriebereichen, wo die Dampfsterilisation angewandt wird und zu einer erheblichen Belastung der verwendeten Filtermedien führt.

Der bekannte Keramikfilter weist einen Filterkörper auf, der von rohrförmiger Gestalt ist. Er wird durch Extrusion und eine sich daran anschließende thermische Behandlung aus Keramikpartikeln gewonnen, die bis zur gegenseitigen Versinterung durch ein organisches Bindemittel verklebt sind. Aus Festigkeitsgründen ist es dabei schwierig, Keramikfilter zu erzeugen, die einerseits eine große Oberflächer haben und andererseits eine besonders geringe Wandstärke von weniger als 2 mm. Mit zunehmender Baugröße eines Filterkörpers steigt daher der hydraulische Widerstand an, den solche Keramikfilter der Rohlösung entgegensetzen. Wegen der daraus resultierenden, schlechten Energiebilanz ist das wenig befriedigend. Ein sich während der bestimmungsgemäßen Verwendung auf der Anströmfläche ablagernder Filterkuchen kann außerdem nicht ohne weiteres durch eine Rückspülung entfernt werden und ein Bersten des Filterkörpes verursachen.

Aus der FR PS 1455084 ist ein Filterkörper aus thermoplastischem Puder bekannt, das an einen Formling außenseitig angeformt und durch einen Versinterungsprozess in dieser Gestalt fixiert wird, bevor der Formling zur Bildung eines mit einer Abflußöffnung verbindbaren Hohlraums mit Hilfe eines Lösungsmittels aufgelöst und aus dem Innenraum des Filterkörpers entfernt wird. Das Verfahrens ist sehr Umständlich und hat keinen Bekanntheitsgrad erreicht.

Der Erfindung liegt die Aufgabe zugrunde, einen Keramikfilter der eingangs genannten Art derart weiter zu entwickeln, daß sich bei unveränderter chemischer und thermischer Beständigkeit eine wesentliche Vergrößerung der zur Verfügung stehenden Filterfläche und ein verminderter, hydraulischer Widerstand ergibt. Der Filterkörper soll dabei einfach zu erhalten sein.

Diese Aufgabe wird erfindungsgemäß bei einem Keramiktilter der eingangs genannten Art mit den kennzeichnenden Merkmalen von Anspruch 1 gelöst. Auf vorteilhafte Ausgestaltungen nehmen die Unteransprüche bezug.

Bei dem erfindungsgemäßen Keramikfilter ist es vorgesehen, daß die Masse zunächst in die Gestalt von Platten und ersten und /oder zweiten Distanzelmenten überführt wird und daß die Platten und Distanzelemente unter Freilassung zumindest eines mit zumindest einer Abflußöffnung verbindbaren Hohlraumes unter Druck zusammengefügt und gemeinsam zu einer homogenen Einheit versintert werden.

Nach einer vorteilhaften Ausgestaltung ist es vorgesehen, daß zumindest eine Platte gemeinsam mit dem ersten und/oder zweiten Distanzelment durch einen Gieß- oder Prägeprozess erzeugt und verfestigt ist. Hierdurch wird eine besonders gute gegenseitige Verbindung zwischen den Distanzelementen und den Platten erzielt.

Nach einer anderen Ausgestaltung ist es vorgesehen, daß die Masse zunächst in die Form einer ungesinterten Grünfolie überführt wird und daß zumindest eine Platte und / oder ein Distanzelement durch einen Stanzprozess aus der Grünfolie gewonnen ist. Diese läßt sich trotz des hohen Keramikgehaltes ähnlich einfach wie ein polymerer Werkstoff be- und verarbeiten. So ist es beispielsweise möglich, die Distanzelemente und die Platten nach ihrer Überführung in die gewünschte Form durch einen Stanzprozess unter Druck zusammenzufügen und anschließend gemeinsam zu einer homogenen Einheit zu versintern, in der das erste und/oder das zweite Distanzelement und zumindest eine Platte einstückig ineinander übergehend verbunden sind. Die Hauptvoraussetzung zur Erreichung dieses Ergebnisses besteht darin, das für alle zu verbindenden Elemente miteinander kompatible oder identische Grünfolien verwendet werden. Diese Bedingung läßt sich leicht erfüllen. Als Ergebnis wird ein Filterkörper erhalten, der sich nicht nur durch eine besonders große Festigkeit auszeichnet sondern darüber hinaus durch eine besonders große Maßhaltigkeit. In bezug auf eine Verwendung in einem Rotationsfilter ist das von großem Vorteil.

Der Filterkörper besteht aus zwei ebenen Filterplatten, die einen Abstand voneinander haben, die sich im wesentlichen parallel zu einander erstrecken und die durch zumindest ein erstes Distanzelement im Bereich ihres Außenumfangs gegeneinander abgedichtet und miteinander verbunden sind. Die Platten und das Distanzelement können unter Verwendung der bekannten Ausgangsstoffe wie beispielsweise Aluminiumoxid erzeugt sein, wobei während des gesamten Herstellungsprozesses eine ganzflächige Unterstützung möglich ist. Die Wandstärke der Platten kann dadurch bis auf Werte von ca. 0,5 bis 1 mm reduziert sein, was die Erzielung von sehr geringen hydraulischen Widerständen ermöglicht.

Trotz der geringen Wandstärke ist es möglich, den Platten in sich selbst einen unsymmetrisch geschichteten Aufbau zu geben und beispielsweise kleinere Porenradien auf der Anströmseite als auf der davon abgewandten Rückseite vorzusehen. Die Größe der Porenradien liegt im Allgemeinen im nm bis um - Bereich. Der sich während der bestimmungsgemäßen Verwendung ergebende hydraulische Widerstand läßt sich dadurch noch weiter vermindern, ohne eine Verschlechterung des Abscheidungsgrades in Kauf nehmen zu müssen.

Das erste Distanzelement kann aus einer elastischen, losen Zwischenlage aus organischem oder anorganischem Material bestehen. Die Reinigung und der Austausch sind in diesem Falle einfach. Zur gegenseitigen Verbindung bedarf es dann besonderer Mittel.

Die Platten können in dem von dem ersten Distanzelement umschlossenen Bereich durch zumindest ein zweites Distanzelement verbunden sein. Die für die Filtration zur Verfügung stehende, aktive Filterfläche, d.h. die Plattengröße, läßt sich hierdurch steigern, ohne daß die Bruchgefährdung steigt. Zweckmäßigerweise besteht das zweite Distanzelement aus mehreren Teilelementen, die musterartig über den von dem ersten Distanzelement umschlossenen Bereich verteilt sind. Eine Optimierung der Filterleistung läßt sich besonders einfach dann erreichen, wenn die kleinsten Abstände einander benachbarter Teilelemente im wesentlichen in jeder Richtung von übereinstimmender Größe sind. Die Optimierung ist darauf gerichtet, während der bestimmungsgemäßen Verwendung einen möglichst großen Anteil der Platten bis zur Grenze der statischen Tragfähigkeit ausgeglichen zu belasten. Die Wandstärke der Platten kann dementsprechend reduziert und der hydraulische Widerstand gesenkt werden. Die außerhalb der Teilelemente verfügbaren Freiräume sind bevorzugt kanalartig ausgebildet und ineinanderübergehend ausgebildet.

Das erste und/oder zweite Distanzelement und zumindest eine der Platten können unlösbar verbunden sein, beispielsweise durch eine gegenseitige Verklebung. Verwendbar sind Keramikkleber, organische Kleber, Glaslot, Metallot und andere adaptierbare Verbindungsarten. Die Distanzelemente bestehen bei einer solchen Ausführung bevorzugt aus Keramikscheiben.

Als zweckmäßig hat es sich erwiesen, wenn der Filterkörper einen kreisförmig begrenzten Außenumfang hat, der die Abflußöffnung konzentrisch umschließt. Er läßt sich bei einer solchen Ausbildung besonders einfach in eine um die Abflußöffnung rotierende Bewegung versetzen, was die Gefahr vermindert, daß sich während der bestimmungsgemäßen Verwendung festhaftende Anlagerungen auf den Anströmflächen ergeben.

An zumindest einer der Platten des Filterkörpers kann ein erhaben vorstehendes, drittes Distanzelement vorgesehen sein, das die Abflußöffnung umschließt, wobei das dritte Distanzelement in eine dichtende Verbindung mit einem weiteren Filterkörper gleicher Art oder eine Abflußleitung bringbar ist. Aus einer beliebig großen Anzahl von übereinstimmend gestalteten Filterkörpern dieser Art läßt sich so eine Kaskade mit beliebig hoher Filterleistung errichten, in der alle Filterkörper in funktionstechnischer Hinsicht parallel geschaltet sind.

Die Zusammenfassung und der Austausch der Filterkörper gestalten sich dabei besonders einfach, wenn die einzelnen Filterkörper im wesentlichen spiegelbildlich gestaltet sind und Abflußöffnungen aufweisen, die axial in beiden Richtungen mündende Teilausgänge haben. Sie können bei einer solchen Ausführung mittels der Teilausgänge auf ein Rohr aufgefädelt werden und gegebenfalls mit diesem zusammen bei Bedarf ersetzt werden. Das Rohr besteht zweckmäßig ebenfalls aus einem metallischen Werkstoff. Es umschließt einen Hohlraum, der mit den Innenräumen der einzelnen Filterkörper strömungsleitend verbunden ist. Die erzielbaren Filterleistungen eines solchen Moduls sind dementsprechend unter Umständen erheblich. Eine Ausbildung ganz aus keramischem Werkstoff ist ebenfalls möglich. Sie empfiehlt sich dann, wenn gleiche thermische Ausdehnungskoeffizienten in allen Teilbereichen erforderlich sind oder eine besonders große chemische und/oder thermische Belastbarkeit.

Der wesentliche Vorteil des erfindungsgemäßen Keramikfilters besteht in seiner einfachen Herstellbarkeit, ausgezeichneten hydraulischen Permeabilität sowie in der Möglichkeit, die aktive Filterfläche nahezu unbegrenzt zu steigern, ohne eine Verschlechterung der mechanischen Widerstandsfähigkeit in Kauf nehmen zu müssen. Sämtliche Baugrößen sind problemlos rückspülbar und hierdurch leicht zu reinigen. Sie lassen sich in der Flüssigkeits- und Gasfiltration verwenden, desweiteren in dem Cross-Flow und dem Dead-End- Betrieb und in jeglicher Art der Separation, die durch eine Modifikation des Filtermaterials erreicht wird. Beispiele sind die Mikro-, Ultra-, Nano- und Hyperfiltration, Pervaporation, Pertraktion und Dialyse. Rotationssymetrisch aufgebaute Ausführungen können als Rotationsfilter zur Anwendung gelangen, in dem der Filterkörper relativ zur Rohlösung mit hoher Geschwindigkeit rotiert, wobei sich eine hohe Überströmgeschwindigkeit mit großer Scherkraft ergibt und eine Verblockung der Anströmflächen durch Fouling verhindert wird. Ausführungen, die vollständig aus keramischen Werkstoffen bestehen, sind in beliebiger Größe realisierbar und hochgradig temperaturbeständig. Darüberhinaus haben kaskadenartig aufgebaute Keramikfilter, durch ihr geringes Totvolumen bedingt, einen äußerst kleinen Platzbedarf bei großer Leistung. Die Platten haben im Regelfall nur eine Dicke von etwa 0,5 mm und einen gegenseitigen Abstand von etwa 0,2 bis 1 mm innerhalb des Filterkörpers. Werden mehrere Filterkörper modulartig zu einer in sich geschlossenen Baueinheit zusammengefaßt, beispielsweise durch Auffädeln auf ein Rohr, dann kann deren gegenseitiger Abstand ähnlich gering bemessen sein und in Abhängigkeit von der Viskosität der Rohlösung 0,4 bis 2 mm betragen.

Der Gegenstand der Erfindung wird nachfolgend anhand der Zeichnung weiter verdeutlicht. Es zeigen:
- Fig.1: einen beispielhaften Filterkörper in längsgeschnittener Darstellung
- Fig. 2: den Filterkörper gemäß Fig. 1 in einer teilweise quergeschnittenen Darstellung
- Fig. 3: mehrere Filterkörper gemäß Fig. 1 und 2 in teilweise längsgeschnittener Darstellung, wobei die einzelnen Filterkörper kaskadenartig zusammengefaßt und in funktioneller Hinsicht parallelgeschaltet sind.
- Fig. 4 und 5: die sich während der bestimmungsgemäßen Verwendung außerhalb und im Inneren des Filterkörpers ergebenden Strömungsverhältnisse
Das in den Darstellungen gezeigte, poröse Keramikfilter umfaßt einen kreisförmig begrenzten Filterkörper, der einen mit zwei Abflußöffnungen 6 verbundenen Hohlraum 1 umschließt, wobei der Filterkörper aus zwei ebenen Platten 2,3 besteht, die einen Abstand voneinander haben, die sich im wesentlichen parallel zueinander erstrecken und die durch ein erstes Distanzelement 4 im Bereich des Außenumfangs gegeneinander abgedichtet und miteinander verbunden sind sowie durch ein zweites Distanzelement 5, das aus mehreren Teilelementen 5.1 besteht, die musterartig über den von dem ersten Distanzelement 4 umschlossenen Bereich verteilt sind. Der gegenseitige Abstand einander benachbarter Teilelemente beträgt nicht mehr als 20 mm. Hierdurch werden die Platten 2,3 in ausgezeichneter Weise aufeinander abgestützt. Der Filterkörper erfährt dadurch keine nennenswerte Formveränderung, wenn seine Außenseite durch den Druck des zu reinigenden Mediums beaufschlagt wird oder seine Innenseite durch den Druck der gegebenenfalls in den Hohlraum 1 eintretenden Rückspülflüssigkeit. Der Filterkörper ist von homogenem Aufbau. Er besteht sowohl im Bereich der Platten 2, 3 als auch im Bereich des ersten Distanzelementes 4 als auch im Bereich des zweiten Distanzelementes 5 aus einem Werkstoffkörper, der homogen ineinander übergehend ausgebildet ist. Er weist dadurch nicht nur eine besonders große, mechanische und thermische Widerstandsfähigkeit auf sondern darüber hinaus eine besonders gute Maßhaltigkeit und Dauerhaftigkeit, was es erleichtert, Unwuchterscheinungen zu vermeiden. Die Verwendung in einem Rotationsfilter wird dadurch erleichtert.

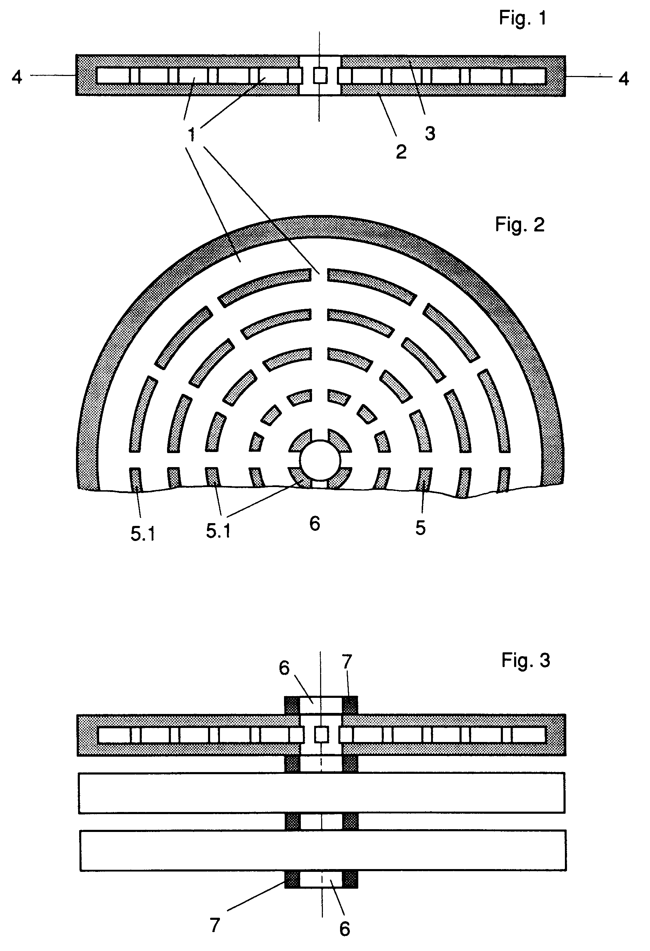

In Fig.3 wird der Aufbau gezeigt, der sich ergibt, wenn mehrere Filterkörper von übereinstimmendem Aufbau unter Zwischenschaltung von Distanzelementen 7 zusammengefügt werden, die die Abflußöffnung 6 konzentrisch umschließen. Die gezeigte Kaskade kann in axialer Richtung beliebig vergrößert werden.

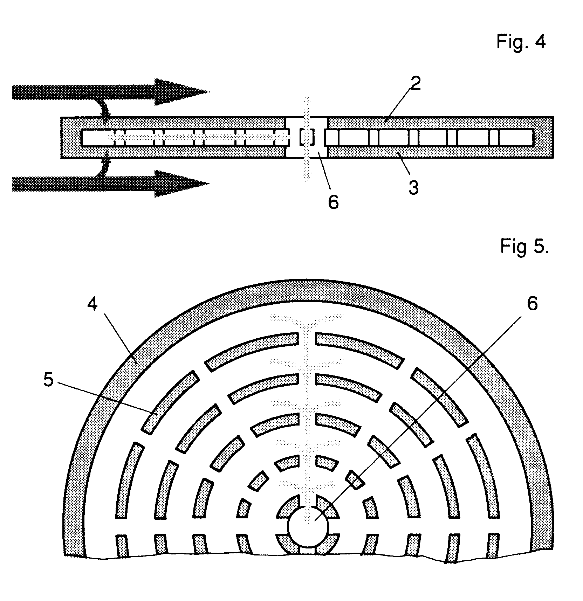

In den Fig. 4 und 5 werden die Strömungsverhältnisse verdeutlicht, die sich während der bestimmungsgemäßen Verwendung eines um seine Achse rotierenden Keramikfilters ergeben mit der Folge, daß sich die zu reinigende Rohlösung in Richtung der schwarz eingetragenen Pfeile im wesentlichen parallel zur Oberflächen der Platten 2,3 bewegt. Das aus der Rohlösung abgeschiedene Filtrat durchdringt deren Porenstruktur und gelangt in den Hohlraum 1, aus dem es über die Abflußöffnung 6 abgeführt wird. Die Filtrationsleistung kann dadurch gesteigert werden, daß die Rohlösung einem Überdruck und die Innenraum 1 einem Unterdruck ausgesetzt wird. Zur Durchführung der Rückspülung werden die diesbezüglichen Gegebenheiten umgekehrt was dazu führt, daß der Außenseite der Platten 2,3 anhaftende Schichten abgelöst bzw. hinsichtlich ihrer Schichtdicke reduziert werden.

## Patentansprüche

1. Poröser Keramikfilter, erhältlich durch ein Verfahren, bei dem keramische Partikel durch Zugabe eines organischen Bindemittels in die Gestalt einer formbaren Masse überführt werden und bei dem die Masse anschließend zu dem Filterkörper geformt und durch eine thermische Nachbehandlung und Versinterung der Partikel bleibend fixiert wird, dadurch gekennzeichnet, daß die Masse zunächst in die Gestalt von ebenen Platten und ersten und /oder zweiten Distanzelmenten überführt wird und daß die Platten und Distanzelemente unter Freilassung zumindest eines mit zumindest einer Abflußöffnung verbindbaren Hohlraumes unter Druck zusammengefügt und gemeinsam zu einer homogenen Einheit versintert werden.

2. Keramikfilter nach Anspruch 1 dadurch gekennzeichnet, daß zumindest eine Platte gemeinsam mit dem ersten und/oder zweiten Distanzelment durch einen Gieß- oder Prägeprozess erzeugt und verfestigt ist.

3. Keramikfilter nach Anspruch 1 oder 2, dadurch gekennzeichnet, daß die Masse zunächst in die Form einer ungesinterten Grünfolie überführt wird und daß zumindest eine Platten und / oder ein Distanzelement durch einen Stanzprozess aus der Grünfolie gewonnen ist.

4. Filterkörper nach Anspruch 1 bis 3, dadurch gekennzeichnet, daß die Platten (2,3) sich im wesentlichen parallel zu einander erstrecken und durch zumindest ein erstes Distanzelement (4) im Bereich des Außenumfangs gegeneinander abgedichtet und miteinander verbunden sind.

5. Keramikfilter nach Anspruch 4, dadurch gekennzeichnet, daß die Platten (2,3) in dem von dem ersten Distanzelement (4) umschlossenen Bereich durch zumindest ein zweites Distanzelement (5) verbunden sind.

6. Keramikfilter nach Anspruch 5, dadurch gekennzeichnet, daß das zweite Distanzelement (5) aus mehreren Teilelementen (5.1) besteht, die musterartig über den von dem ersten Distanzelement (4) umschlossenen Bereich verteilt sind.

7. Keramikfilter nach Anspruch 3 bis 6, dadurch gekennzeichnet, daß das erste (4) und/oder das zweite Distanzelement (5) und zumindest eine der Platten (2,3) unlösbar verbunden sind.

8. Keramikfilter nach Anspruch 7, dadurch gekennzeichnet, daß das erste (4) und/oder das zweite Distanzelement (5) eine den Platten (2,3) entsprechende, innere Struktur und Zusammensetzung aufweist.

9. Keramikfilter nach Anspruch 8, dadurch gekennzeichnet, daß das erste (4) und/oder das zweite Distanzelement (5) und zumindest eine Platte (2,3) einstückig ineinander übergehend ausgebildet sind.

10. Keramikfilter nach Anspruch 9, dadurch gekennzeichnet, daß das erste (4) und/oder das zweite Distanzelement (5) und die Platte (2,3) durch einen Gieß- oder Prägeprozess gemeinsam erzeugt und gemeinsam verfestigt sind.

11. Keramikfilter nach Anspruch 3 bis 10, dadurch gekennzeichnet, daß der Filterkörper einen kreisförmig begrenzten Außenumfang hat, der die Abflußöffnung (6) konzentrisch umschließt.

12. Keramikfilter nach Anspruch 11, dadurch gekennzeichnet, daß die Abflußöffnung (6) zwei einander spiegelbildlich gegenüberliegende Teilausgänge hat, die in axialer Richtung münden.

13. Keramikfilter nach Anspruch 11 bis 12, dadurch gekennzeichnet, daß der Filterkörper in eine um die Abflußöffnung (6) rotierende Bewegung versetzbar ist.

14. Keramikfilter nach Anspruch 3 bis 13, dadurch gekennzeichnet, daß der Filterkörper aus zwei im wesentlichen gleichen Platten (2,3) besteht, die spiegelbildlich zusammengefügt sind.

15. Keramikfilter nach Anspruch 3 bis 14, dadurch gekennzeichnet, daß an zumindest einer der Platten (2,3) des Filterkörpers ein erhaben vorstehendes, drittes Distanzelement (7) vorgesehen ist, das die Abflußöffnung (6) umschließt, und daß das dritte Distanzelement (7) in eine dichtende Verbindung mit einem weiteren Filterkörper gleicher Art oder eine Abflußleitung bringbar ist.

16. Keramikfilter nach Anspruch 3 bis 15, dadurch gekennzeichnet, daß mehrere Filterkörper mittels der beiden Teilausgänge ihrer Abflußöffnung (6) in Abständen von einander auf ein Rohr aufgefädelt und gegenüber dem Rohr abgedichtet sind und daß das Rohr einen axial zumindest in einer Richtung offenen Hohlraum umschließt, der mit den Innenräumen 1 der einzelnen Filterkörper strömungsleitend verbunden ist.

17. Keramikfilter nach Anspruch 16, dadurch gekennzeichnet, daß das Rohr aus einem Keramikwerkstoff besteht und lösbar mit den Filterkörpern verbunden ist.
